## Europäisches Patentamt

## European Patent Office

## Office européen des brevets

(11) Veröffentlichungsnummer: **0 287 808 B1**

# EUROPÄISCHE PATENTSCHRIFT

(45) Veröffentlichungstag der Patentschrift: **16.10.91**

(51) Int. Cl.⁵: **B23K 35/30, C22C 19/03**

(21) Anmeldenummer: **88104305.3**

(22) Anmeldetag: **18.03.88**

(54) **Nickelbasis-Lot für Hochtemperatur-Lötverbindungen.**

(30) Priorität: **10.04.87 DE 3712271**

(43) Veröffentlichungstag der Anmeldung:
**26.10.88 Patentblatt 88/43**

(45) Bekanntmachung des Hinweises auf die
Patenterteilung:
**16.10.91 Patentblatt 91/42**

(84) Benannte Vertragsstaaten:
**DE FR GB IT**

(56) Entgegenhaltungen:
**DE-A- 3 141 053**
**DE-A- 3 336 221**
**GB-A- 2 085 921**
**US-A- 3 902 900**

(73) Patentinhaber: **VACUUMSCHMELZE GMBH**
**Grüner Weg 37 Postfach 2253**
**W-6450 Hanau 1(DE)**

(72) Erfinder: **Emmerich, Kurt, Dr.**
**Im Sand 2**
**W-8755 Alzenau 3(DE)**

## Beschreibung

Die Erfindung betrifft ein Nickelbasis-Lot.

Insbesondere aluminium- und chromhaltige Werkstoffe neigen zu erhöhter Oxidschichtbildung, durch welche eine Benetzung mit konventionellen Loten erschwert wird. Das Problem ist bei Hochtemperaturwerkstoffen, die eine geschlossene Oxidschicht bilden, als besonders schwerwiegend anzusehen.

Ein aktuelles Anwendungsbeispiel ist das Löten von Eisen-Chrom-Aluminium-Stahlbändern zu Wabenkörpern für Autoabgaskatalysatorträger. Um in diesen oder ähnlichen Anwendungsfällen sichere und zuverlässige Lötverbindungen zu schaffen, ist man gezwungen, vor dem Löten zumindest an den Lötstellen die Oxidschichten zu beseitigen. Zum Beseitigen dieser Oxidschichten sind meist sehr aufwendige Verfahren erforderlich, wie Glühen an Luft und anschließendes Abbeizen, Glühen in reduzierender Atmosphäre, Glühen in Salzschmelzen, Ionenätzen, Plasmareinigungsverfahren, mechanische Oberflächenbehandlung, chemisches Beizen in unterschiedlichen Medien, elektrolytische Beizverfahren und galvanische Metallabscheidung, z. B. Vernickeln und Verkupfern. Ein ausführlicher Überblick über derartige Verfahren ist aus einer Veröffentlichung von Steffens et al. DVS-Berichte 92 (1984) 6, zu entnehmen.

Aus der DE-A-33 36 221 ist ein Füllmaterial für gegen Schweißhitze beständige Legierungen auf Nickel-Basis mit einem geringen Boranteil von 0,003 bis 0,015 Gew.-% bekannt. Die Legierung weist außerdem 0,1 bis 0,15 Gew.-% Zirkon auf. Aus der DE-A-31 41 053 ist weiterhin ein Schweißdraht für das automatische Lichtbogenschweißen bekannt. Dieser Schweißdraht besteht aus einer Metallhülle und einer pulverförmigen Kernzusammensetzung. Die Kernfüllung enthält als wesentliche Legierungselemente Nickel, Silizium, Bor, Niob und Kohlenstoff. Diese Elemente sollen in einer solchen Menge vorhanden sein, daß das abgeschiedene Metall, das von dem Schweißdraht abgegeben wird, mindestens 40 Gew.-% Nickel, 3 bis 8 Gew.-% Silizium, 0,1 bis 0,4 Gew.-% Bor, 0,3 bis 1,8 Gew.-% Niob und 0,2 bis 1,5 Gew.-% Kohlenstoff enthält. Eine ähnliche Schweißelektrode ist auch aus der GB-A-20 85 921 bekannt. Weiterhin ist aus der US-A-39 02 900 ein hochtemperaturfestes Material auf Nickelbasis bekannt. Die Legierungen enthalten zum Teil u. a. Titan, Niob, Bor und Zirkon. Neben Nickel sind weiterhin Kobalt, Molybdän und Aluminium vorhanden. Die Legierungen sind beispielsweise zur Verwendung in Gasturbinen vorgesehen.

Der Erfindung liegt die Aufgabe zugrunde, ein Nickelbasis-Lot zu schaffen, bei dem auf die bisherigen aufwendigen Beseitigungsverfahren für die Oxidschichten verzichtet werden kann.

Diese Aufgabe wird mit einem Nickelbasis-Lot gemäß Patentanspruch 1 gelöst.

Das erfindungsgemäße Nickelbasis-Lot besteht aus einer Legierung mit einer Zusammensetzung von 0 bis 4 Atom-% Eisen, 0 bis 21 Atom-% Chrom, 0 bis 19 Atom-% Bor, 0 bis 12 Atom-% Silizium, 0 bis 22 Atom-% Phosphor, 0 bis 3 Atom-% Kohlenstoff und 0,1 bis 5 Atom-% Niob, Zirkon oder Titan, Rest Nickel, wobei die Anteile von Bor, Kohlenstoff, Silizium und Phosphor insgesamt 16 bis 24 % betragen.

Es hat sich gezeigt, daß durch die Zusätze von Zirkon, Niob und/oder Titan zum Lot eine direkte gute Benetzung der Lötstellen an den aluminium- und chromhaltigen Stählen bzw. in den Nickelbasis-Legierungen erreicht werden kann. Es wird durch dieses Lot auch eine bessere Benetzung erreicht, wenn der ursprünglich von der Oxidhaut befreite Werkstoff während der Aufheizphase wieder eine dünne Oxidhaut ausbildet. Die Zusätze sind so bemessen, daß bei der Abkühlung von der Löttemperatur intermetallische Phasen vermieden werden. Dies wird mit Sicherheit erreicht, wenn die Zusätze 0,1 bis 5 Atom-% betragen.

Ein solches Lot ist besonders geeignet zum Löten von Eisen-Chrom-Aluminium-Stahlbänderteilen zu Wabenkörpern von Autoabgaskatalysatorträgern.

Das erfindungsgemäße Nickelbasis-Lot wird als im wesentlichen amorphe oder teilkristalline Folie vorzugsweise mit einer Dicke von 10 bis 50 μm hergestellt, da es dann als homogene Lötfolie vorliegt, die keine Ausscheidungen mit höherem Schmelzpunkt enthält. Die Verfahren zur Herstellung rasch erstarrender Folien sind an sich bekannt und bilden nicht Gegenstand dieser Erfindung.

Mit Lötfolien dieser Art mit einer Dicke von 25 μm wurden jeweils 50 μm dicke Fe-23 % Cr-5 % Al-Folien verlötet. Hierbei wurde ausgegangen von einem Normlot L-Ni 1a mit einer Zusammensetzung von Ni60Cr14Fe4Si8B14, wobei dieser Legierung jeweils 0,5 bzw. 1 Atom-% Ti beigefügt wurden. Es zeigte sich hierbei, daß das Normlot L-Ni 1a eine unvollständige Benetzung der Fe-Cr-Al-Folien aufwies, während die beiden Lötfolien mit dem Ti-Zusatz eine wesentlich bessere Benetzung ergaben.

## Patentansprüche

1. Nickelbasis-Lot, das im wesentlichen amorph oder teilkristallin ist, mit einer Zusammensetzung von 0 bis 4 Atom-% Eisen, 0 bis 21 Atom-% Chrom, 0 bis 19 Atom-% Bor, 0 bis 12 Atom-% Silizium, 0 bis 22 Atom-% Phosphor, 0 bis 3 Atom-% Kohlenstoff und 0,1 bis 5 Atom-% Niob, Zirkon oder Titan, Rest Nickel, wobei die Anteile von Bor, Kohlenstoff, Silizium und Phosphor insgesamt 16 bis 24 Atom-% betragen.

2. Nickelbasis-Lot nach Anspruch 1, **dadurch gekennzeichnet,** daß es als homogene, duktile Lötfolie mit einer Dicke von 10 bis 50 $\mu$m vorliegt.

3. Verwendung eines Nickelbasis-Lots nach Anspruch 1 oder 2 für Hochtemperatur-Lotverbindungen von Stählen und Nickelbasis-Superlegierungen.

4. Verwendung eines Nickelbasislots nach Anspruch 3, **dadurch gekennzeichnet,** daß es zum Löten von Eisen-ChromAluminium-Stahlbänderteilen zu Wabenkörpern von Autoabgaskatalysatoren eingesetzt wird.

## Claims

1. A nickel-based solder which is substantially amorphous or partially crystalline, with a composition of 0 to 4 atom % iron, 0 to 21 atom % chromium, 0 to 19 atom % boron, 0 to 12 atom % silicon, 0 to 22 atom % phosphorus, 0 to 3 atom % carbon and 0.1 to 5 atom % niobium, zirconium or titanium, the remainder nickel, where the proportions of boron, carbon, silicon and phosphorus amount to a total of 16 to 24 atom %.

2. A nickel-based solder as claimed in claim 1, characterised in that it has the form of a homogeneous, ductile soldering foil with a thickness of 10 to 50 $\mu$m.

3. The use of a nickel-based solder as claimed in claim 1 or claim 2 for high-temperature soldering connections of steel and nickel-based super-alloys.

4. The use of a nickel-based solder as claimed in claim 3, characterised in that it is used to solder iron-chrome-aluminium steel strip components to form honeycomb components of car exhaust catalyzers.

## Revendications

1. Brasure à base de nickel, qui est essentiellement amorphe ou partiellement cristalline, composée de 0 à 4 % en atomes de fer, de 0 à 21 % en atomes de chrome, de 0 à 19 % en atomes de bore, de 0 à 12 % en atomes de silicium, de 0 à 22 % en atomes de phosphore, de 0 à 3 % en atomes de carbone et de 0,1 à 5 % en atomes de niobium, zirconium ou titane, le reste étant constitué de nickel, les proportions de bore, carbone, silicium et phosphore allant au total de 16 à 24 % en atomes.

2. Brasure à base de nickel selon la revendication 1, caractérisée en ce qu'elle se trouve sous forme d'une feuille de brasure ductile homogène ayant une épaisseur de 10 à 50 $\mu$m.

3. Utilisation d'une brasure à base de nickel selon la revendication 1 ou 2, pour assemblage par brasure haute température d'aciers et de superalliages à base de nickel.

4. Utilisation d'une brasure à base de nickel selon la revendication 3, caractérisée en ce qu'on l'utilise pour le brasage d'éléments de ruban en acier-fer-chrome-aluminium en corps de nids d'abeille de catalyseurs de gaz d'échappement d'automobiles.